# EUROPÄISCHE PATENTSCHRIFT

(11) **EP 2 222 483 B1**
(45) Veröffentlichungstag und Bekanntmachung des Hinweises auf die Patenterteilung: **10.10.2012**
(21) Anmeldenummer: 08861289.0
(22) Anmeldetag: 20.10.2008
(51) Int. Cl.: B60C 11/12

(54) **FAHRZEUGLUFTREIFEN**
PNEUMATIC AIR TIRE
PNEUMATIQUE DE VÉHICULE

(30) Priorität: 15.12.2007 DE 102007060559
(43) Veröffentlichungstag der Anmeldung: 01.09.2010
(73) Patentinhaber: Continental Reifen Deutschland GmbH, 30165 Hannover (DE)
(72) Erfinder: SENG, Matthias, 30449 Hannover (DE); DIENSTHUBER, Franz, 30559 Hannover (DE)
(74) Vertreter: Widjaja, Wira
(86) Internationale Anmeldenummer: PCT/EP2008/064105
(87) Internationale Veröffentlichungsnummer: WO 2009/077233

(56) Entgegenhaltungen:
- WO-A1-2005/123420
- JP-A- 2 197 402
- JP-A- 7 276 923
- JP-A- 2007 030 686

## Beschreibung

Die Erfindung betrifft einen Fahrzeugluftreifen mit einem Laufstreifen, welcher sich aus Profilelementen, wie Profilblöcken oder Profilrippen, zusammensetzt, welche jeweils mit einer Anzahl von Einschnitten versehen sind, die in Draufsicht wellen- oder zick-zack-förmig verlaufen und sich vorzugsweise im Wesentlichen in Querrichtung des Laufstreifens erstrecken, wobei die Einschnitte um ihre Stellen maximaler Amplitude breitere Abschnitte aufweisen als dazwischen, und wobei die Verbreiterungen außen angesetzt sind.

Fahrzeugluftreifen mit Laufstreifen mit schmalen Einschnitten sind insbesondere für den Einsatz unter winterlichen Fahrbedingungen vorgesehen und in unterschiedlichen Ausführungsvarianten bekannt. Dabei ist eine Ausführung der Einschnitte mit einem wellen- oder zick-zack-förmigen Verlauf üblich. Die Einschnitte können die Profilelemente komplett durchqueren oder über einen Teilbereich des Profilelements verlaufen und reichen zumeist abschnittsweise in radialer Richtung bis in eine Tiefe, die der vorgesehenen Profiltiefe entspricht. Darüber hinaus sind Einschnitte in Laufstreifen bekannt, die variierende Breiten aufweisen. Ein Fahrzeugluftreifen der eingangs genannten Art ist aus der WO 2005/123420 A1 bekannt. Aus der US-A-6,681,824 ist ein Laufstreifen mit Einschnitten bekannt, die bei einem im Wesentlichen geraden Verlauf in ihren in die Rillen mündenden Abschnitten am schmälsten und im mittleren Bereich wesentlich breiter sind. In radialer Richtung verlaufen diese Einschnitte etwa zick-zack-förmig. Auf diese Weise soll die gegenseitige Abstützung der Einschnittwände unter Belastung verbessert sein.

Es ist bekannt, dass eine Ausrichtung der Einschnitte in Profilquerrichtung eine Verbesserung der Traktionseigenschaften und eine Ausrichtung der Einschnitte in Umfangsrichtung eine Verbesserung der Seitenführungseigenschaften, insbesondere auf glatten Fahrbahnen, bewirkt. Eine Verbesserung der Traktionseigenschaften auf winterlichen Fahrbahnen geht üblicherweise mit einer Verschlechterung der Bremseigenschaften auf trockenen Fahrbahnen einher. Eine Verbesserung der Seitenführungseigenschaften bewirkt eine Verringerung der Quersteifigkeit des Laufstreifens und damit schlechtere Fahreigenschaften auf trockenen Fahrbahnen.

Der Erfindung liegt die Aufgabe zugrunde, wellen- oder zick-zack-förmige verlaufende Einschnitte in Laufstreifen von Fahrzeugluftreifen derart zu gestalten, dass bei verbesserten Seitenführungseigenschaften auf glatten Fahrbahnen gute Fahreigenschaften auf trockenen Fahrbahnen und bei verbesserter Wintertraktion gute Trockenbremseigenschaften gewährleistet sind.

Gelöst wird die gestellte Aufgabe erfindungsgemäß dadurch, dass die Breite der breiteren Abschnitte um 50% bis 150% größer ist als die Breite der zwischen ihnen verlaufenden Einschnittsabschnitte.

Die breiteren Abschnitte um die Stellen maximaler Amplitude bewirken unter Seitenkraft und unter Umfangskraft eine spezielle Verformung der Einschnitte, sodass die Traktionseigenschaften, die Bremseigenschaften auf Eis und die Seitenführungseigenschaften gleichermaßen verbessert sind. Durch die Verbreiterungen werden mehr wirksame Griffkanten zur Verfügung gestellt und "Schneetaschen" gebildet, die den Wintergriff verbessern. Erfindungsgemäß ausgeführte Einschnitte können somit auch unter einem geringeren Winkel zur Querrichtung des Laufstreifens angeordnet werden als herkömmlich wellen- oder zick-zack-förmig ausgeführte Einschnitte. Zur Erzielung einer optimalen Wirkung der sich im Bereich der breiteren Abschnitte bildenden "Schneetaschen" ist es vorteilhaft, wenn die Breite dieser breiteren Abschnitte um 50 % bis 150 % größer ist als die Breite der zwischen ihnen verlaufenden Einschnittabschnitte.

Auch die Erstreckung der breiteren Abschnitte in Richtung des Verlaufs der Einschnitte ist diesbezüglich von Bedeutung und sollte zwischen 25 % und 50 % der jeweiligen Wellenlänge des Einschnittes betragen.

Je nach der Anordnung der Einschnitte in den einzelnen Profilelementen und /oder in Abhängigkeit von der Position der Profilelemente im Laufstreifen kann es vorteilhaft sein, wenn die breiteren Abschnitte eine im Wesentlichen konstante Breite aufweisen. Es kann aber auch günstiger sein, wenn sich die Breite der verbreiterten Abschnitte zu den Stellen mit der maximalen Amplitude vergrößert.

In diesem Zusammenhang kann es ferner vorteilhaft sein, die breiteren Abschnitte entweder symmetrisch oder asymmetrisch zu den Stellen maximaler Amplitude anzuordnen.

Weitere Merkmale, Vorteile und Einzelheiten der Erfindung werden nun anhand der Zeichnung, die schematisch ein Ausführungsbeispiel darstellt, näher beschrieben. Dabei zeigen
Fig. 1 eine Draufsicht auf einen Ausschnitt eines Laufstreifens eines Fahrzeugluftreifens,
Fig. 2. einen Einschnitt aus dem Laufstreifen gemäß Fig. 1 in vergrößerter Darstellung,
Fig. 3 den Einschnitt aus Fig. 2 unter der Wirkung einer Umfangskraft und
Fig. 4 den Einschnitt aus Fig. 2 unter der Wirkung einer Quer- beziehungsweise Seitenkraft.

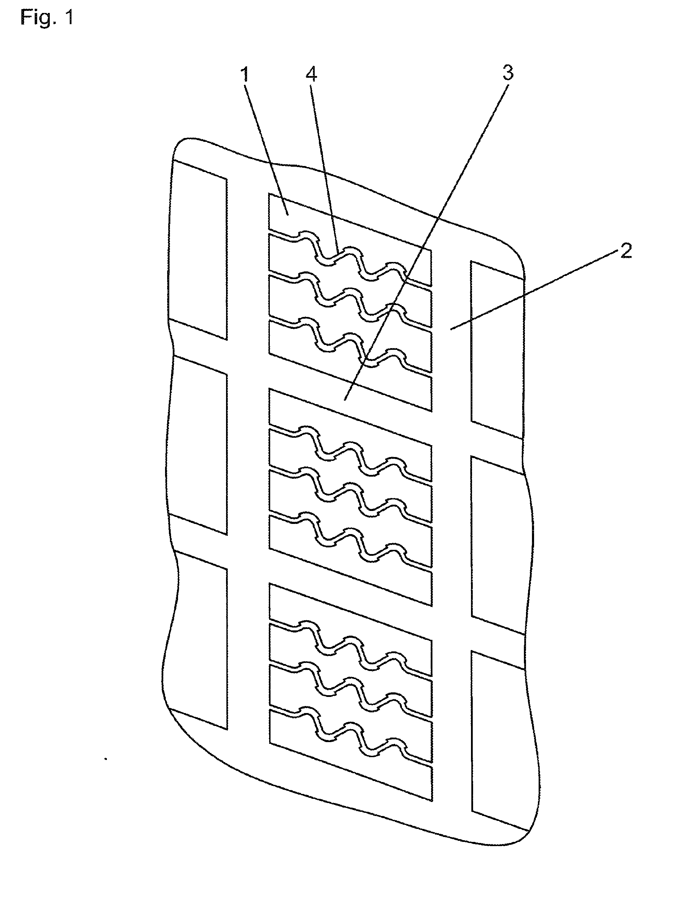

Fig. 1 zeigt einen Ausschnitt eines Laufstreifens, welcher insbesondere für Winterreifen für Personenkraftwagen geeignet und vorgesehen ist. Dargestellt sind einige Profilelemente, die als Profilblöcke 1 ausgeführt sind und in Umfangsrichtung Profilblockreihen bilden, welche voneinander durch breite und in Umfangsrichtung umlaufende Umfangsrillen 2 getrennt sind. Quernuten 3 trennen die Profilblöcke 1 in den einzelnen Profilblockreihen voneinander. Jede Profilblock 1 ist mit einer Anzahl, bei der dargestellten Ausführungsvariante sind es jeweils drei, Einschnitten 4 versehen, die sich zumindest im Wesentlichen parallel zu den Quernuten 3 erstrecken, den jeweiligen Profilblock 1 komplett durchqueren und voneinander sowie von den die Quernuten 3 begrenzenden Profilblockkanten im Wesentlichen gleich beabstandet sind. Die gezeigten Einschnitte 4 verlaufen wellenförmig mit konstanter Amplitude und konstanter Wellenlänge. Erfindungsgemäß ausgeführte Einschnitte 4 können jedoch auch über ihre Erstreckung variierende Amplituden und/oder variierende Wellenlängen aufweisen und/oder zick-zack-förmig verlaufen.

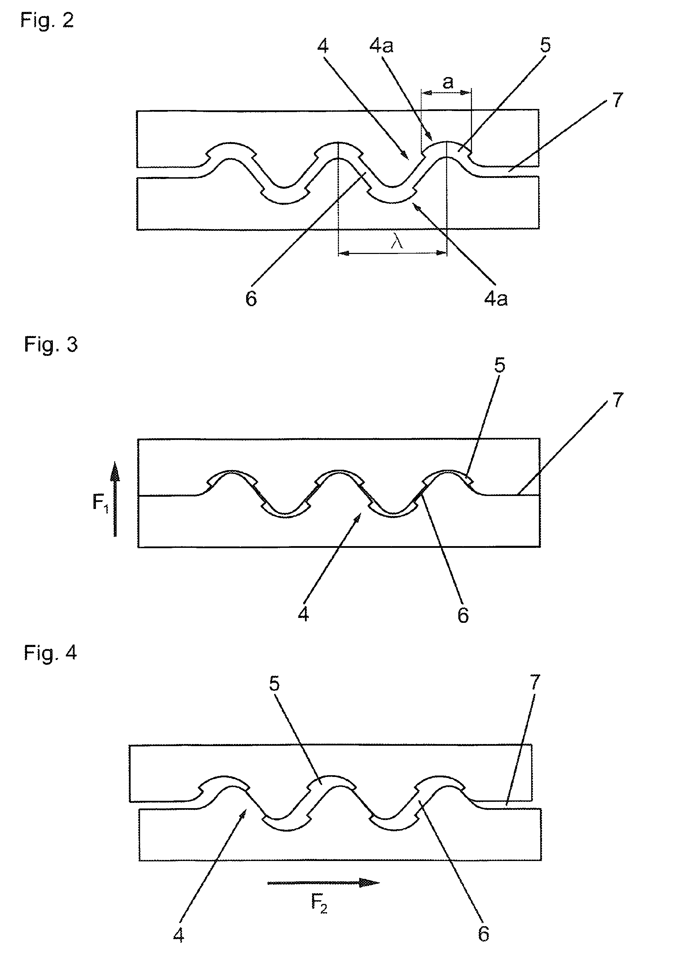

Fig. 2 zeigt einen Einschnitt 4 aus einem der Profilblöcke 1 der Fig. 1 mit Stellen 4a maximaler Amplitude. Im Bereich um und beidseitig der Stellen 4a maximaler Amplitude ist der Einschnitt 4 mit Abschnitten 5 versehen, die breiter sind als die Verbindungsabschnitte 6 zwischen den Abschnitten 5. Die Verbindungsabschnitte 6 und die Endabschnitte 7 des Einschnittes 4 weisen jeweils eine konstante Breite auf, die zwischen 0,2 mm und 0,8 mm, insbesondere zwischen 0,4 mm und 0,6 mm, beträgt. Die die Stellen 4a maximaler Amplitude umgebenden Abschnitte 5 sind um 50% bis 150% breiter als die Abschnitte 6 bzw. 7, wobei die Verbreiterungen jeweils außen angesetzt sind. Bei der gezeigten Ausführungsform verbreitern die Abschnitte 5 über ihre Erstreckung den Einschnitt 4 auf konstante Weise. Möglich ist auch eine Ausführung, bei der sich die Breite der Abschnitte 5, jeweils ausgehend von den Verbindungsabschnitten 6, zu den Stellen 4a maximaler Amplitude kontinuierlich vergrößert, sodass die breiteste Stelle an der Stelle 4a mit maximaler Amplitude liegt. Die Abschnitte 5 sind bei der gezeigten Ausführung ferner symmetrisch zu den Stellen 4a mit maximaler Amplitude angeordnet, wobei ihre Gesamterstreckung a zwischen 25% und 50% der jeweiligen Wellenlänge λ beträgt.

Die breiteren Abschnitte 5 können in radialer Richtung bis auf die vorgesehene Einschnitttiefe oder bis auf eine geringere Tiefe, vorzugsweise bis zu 2 mm oder 3 mm, reichen.

Fig. 3 zeigt die Verformung eines Einschnittes 4 unter der Wirkung einer Umfangskraft in Richtung des Pfeiles F₁. Die Abschnitte 7 schließen sich und die Verbindungsabschnitte 5 werden wesentlich schmäler ohne sich zu schließen. In den Abschnitten 5 verbleiben Spalten, die bei herkömmlich ausgeführten Einschnitten mit konstanter Breite nicht vorhanden wären, da sich solche Einschnitte im Bereich der Stellen mit maximaler Amplitude bei Umfangskräften schließen. Die in den Abschnitten 5 verbleibenden Spalten wirken als "Schneetaschen" bzw. auf eisigen Fahrbahnen als "Schmelzwasserspeicher". Dadurch wird der Wintergriff verbessert.

Fig. 4 zeigt einen Einschnitt 4 unter der Wirkung einer Seitenkraft in Richtung des Pfeiles F₂. Wie bei herkömmlichen Einschnitten konstanter Breite schließt sich unter der Wirkung einer Seitenkraft jeder zweite Verbindungsabschnitt 6. Die Quersteifigkeit des Profilblockes wird daher gleichermaßen beeinflusst wie bei herkömmlich ausgeführten wellenförmigen Einschnitten. In den Abschnitten 5 werden jedoch mehr effektive Griffkanten zur Verfügung gestellt. Darüber hinaus ist das Volumen der in den Abschnitten 5 verbleibenden, als "Schneetaschen" wirkenden Spalten größer als bei herkömmlich ausgeführten Einschnitten. Daraus resultiert eine Verbesserung der Seitenführung des Reifens.

### Bezugsziffernliste

- 1: Profilelement
- 2: Umfangsrille
- 3: Quernut
- 4: Einschnitte
- 5: Abschnitte
- 6: Verbindungsabschnitt
- 7: Endabschnitt
- a: Erstreckung
- λ: Wellenlänge

## Patentansprüche

1. Fahrzeugluftreifen mit einem Laufstreifen, welcher sich aus Profilelementen (1), wie Profilblöcken oder Profilrippen, zusammensetzt, welche jeweils mit einer Anzahl von Einschnitten (4) versehen sind, die in Draufsicht wellen- oder zick-zack-förmig verlaufen und sich vorzugsweise im Wesentlichen in Querrichtung des Laufstreifens erstrecken, wobei die Einschnitte (4) um ihre Stellen (4a) maximaler Amplitude breitere Abschnitte (5) aufweisen als dazwischen, und wobei die Verbreiterungen außen angesetzt sind,
**dadurch gekennzeichnet,**
**dass** die Breite der breiteren Abschnitte (5) um 50% bis 150% größer ist als die Breite der zwischen ihnen verlaufenden Einschnittsabschnitte (6).

2. Fahrzeugluftreifen nach Anspruch 1, **dadurch gekennzeichnet, dass** die Erstreckung (a) der breiteren Abschnitte (5) zwischen 25% und 50% der jeweiligen Wellenlänge (λ) des Einschnittes (4) beträgt.

3. Fahrzeugluftreifen nach einem der Ansprüche 1 bis 3, **dadurch gekennzeichnet, dass** die breiteren Abschnitte (5) eine im Wesentlichen konstante Breite aufweisen.

4. Fahrzeugluftreifen nach einem der Ansprüche 1 bis 3, **dadurch gekennzeichnet, dass** die breiteren Abschnitte (5) symmetrisch oder asymmetrisch zu den Stellen (4a) maximaler Amplitude angeordnet sind.

## Claims

1. Pneumatic vehicle tyre having a tread which is composed of profile elements (1) such as profile blocks or profile ribs which are provided in each case with a number of sipes (4), which sipes run in an undulating or zig-zagged fashion as seen in plan view and extend preferably substantially in the transverse direction of the tread, wherein the sipes (4) have wider portions (5) around their points (4a) of maximum amplitude than in between, and wherein the widenings are applied on the outside,
**characterized**
**in that** the width of the wider portions (5) is 50% to 150% greater than the width of the sipe portions (6) running between said wider portions.

2. Pneumatic vehicle tyre according to Claim 1, **characterized in that** the extent (a) of the wider portions (5) amounts to between 25% and 50% of the respective wavelength (λ) of the sipe (4).

3. Pneumatic vehicle tyre according to one of Claims 1 to 3, **characterized in that** the wider portions (5) have a substantially constant width.

4. Pneumatic vehicle tyre according to one of Claims 1 to 3, **characterized in that** the wider portions (5) are arranged symmetrically or asymmetrically with respect to the points (4a) of maximum amplitude.

## Revendications

1. Bandage pneumatique pour roue de véhicule, présentant une bande de roulement constituée de l'assemblage d'éléments profilés (1), par exemple des blocs profilés ou des nervures profilées, tous dotés d'un certain nombre d'entailles (4) qui s'étendent vues en plan en ondulations ou en zigzag, de préférence essentiellement dans la direction transversale de la bande de roulement, les entailles (4) présentant autour de leurs emplacements (4a) d'amplitude maximale des parties (5) plus larges qu'entre ceux-ci, les élargissements étant disposés à l'extérieur,
**caractérisé en ce que**
la largeur des parties (5) plus larges est supérieure de 50 % à 150 % à la largeur des parties d'entaille (6) qui s'étendent entre elles.

2. Bandage pneumatique pour roue de véhicule selon la revendication 1, **caractérisé en ce que** l'extension (a) des parties (5) plus larges représente entre 25 % et 50 % de la longueur (λ) de chacune des ondulations de l'entaille (4).

3. Bandage pneumatique pour roue de véhicule selon l'une des revendications 1 à 3, **caractérisé en ce que** les parties (5) plus larges présentent une largeur essentiellement constante.

4. Bandage pneumatique pour roue de véhicule selon l'une des revendications 1 à 3, **caractérisé en ce que** les parties (5) plus larges sont disposées symétriquement au asymétriquement par rapport aux emplacements (4a) d'amplitude maximale.
